# EUROPEAN PATENT SPECIFICATION

(11) **EP 1 950 648 B1**
(45) Date of publication and mention of the grant of the patent: **20.11.2013**
(21) Application number: 06761307.5
(22) Date of filing: 20.06.2006
(51) Int. Cl.: G06F 3/033, G06F 1/32

(54) **A POWER-SAVING WIRELESS MOUSE**
STROMSPARENDE DRAHTLOSE MAUS
SOURIS SANS FIL A ECONOMIE D'ENERGIE

(30) Priority: 21.06.2005 CN 200510021166
(43) Date of publication of application: 30.07.2008
(73) Proprietor: Shenzhen Skyworth-RGB Electronic Co., Ltd., Shenzhen 518057 (CN)
(72) Inventor: YANG, Junzhi Unit A 13-16/F, Shenzhen 518057 (CN); ZAN, Pengchao Unit A 13-16/F, Shenzhen 518057 (CN); WU, Wei Unit A 13-16/F, Shenzhen 518057 (CN)
(74) Representative: Beetz & Partner
(86) International application number: PCT/CN2006/001404
(87) International publication number: WO 2006/136099

(56) References cited:
- EP-A2- 0 910 006
- CN-A- 1 604 023
- CN-Y- 2 522 923
- US-A1- 2003 197 488
- US-A1- 2004 019 810
- Bill Bowden: "Power Off time delay relay", , 1 January 1999 (1999-01-01), XP55018809, Retrieved from the Internet: URL:http://www.bowdenshobbycircuits.info/p age2.htm [retrieved on 2012-02-08]

## Description

### BACKGROUND OF THE INVENTION

### Field of the Invention

The present invention relates to a mouse, more particularly to a wireless mouse.

A power-saving wireless mouse as defined in the preamble portion of patent claim 1 or 2 is known from US 2003/197488 A1.

### Related Art

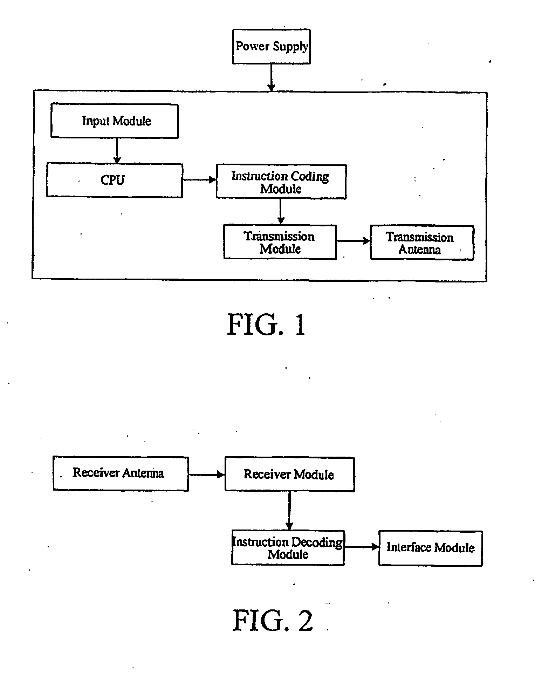

As an input device for the computer, a mouse has brought great conveniences for people in manipulating the computer. The invention of wireless mouse enables the mouse to get rid of a cable, which not only eliminates the poor cable-pulling feeling of the wired scroll mouse, but also overcomes the disadvantage in the structure and performance of the mechanical ball mouse. FIG. 1 is a structural principle view of a wireless mouse transmitter in the prior art, which includes an input module, a CPU, an instruction coding module, a transmission module, and a transmission antenna. When receiving an instruction from the input module, the CPU outputs the received instruction to the instruction coding module. The instruction coding module encodes and then outputs the instruction to the transmission module. The transmission module receives the encoded instruction and transmits the instruction through the transmission antenna. FIG. 2 is a structural principle view of a wireless mouse receiver. A receiver antenna receives a signal transmitted from the transmitter, and then transfers the signal to an instruction decoding module for being decoded there via a receiver module. After being decoded, the signal is transferred to a computer host via an interface module.

Generally, a wireless mouse takes two ordinary dry batteries as the power, and the power circuit is always turned on, regardless whether the mouse is clicked or not. As a result, a great deal of power is consumed, and a lot of energy is wasted. Two batteries can be used for merely 4-5 days and must be replaced frequently, which causes great inconveniences for the user and increases the cost.

Accordingly, some power-saving mouse techniques have been proposed in the prior art. For example, the Chinese Patent Application, entitled "WIRELESS MOUSE WITH POWER SAVER AND POWER SAVING METHOD", (Application NO. 02119345.2, Publication Date: 2003-11-26, Publication NO. CN1458573A) discloses a wireless mouse with an idle mode, a power-saving mode, and a deep power-saving mode in the background of the invention, and further discloses a wireless mouse with an idle mode and a power-saving mode. The above two solutions are based upon the same power-saving principle, that is, the mouse consumes different amount of electricity in different modes. In the above methods, through the power-saving mode or the deep power-saving mode, much power is saved indeed. However, even if the mouse is always in the power-saving mode or the deep power-saving mode, a certain current is still maintained, and as a result, a great deal of power is consumed, that is, even if the user does not often use the mouse, the mouse still consumes the power of the battery continuously. Therefore, the above methods do not achieve the power-saving function essentially

US2003/0197488A1 discloses a wireless interface device for servicing communications between a wirelessly enabled host and at least one user input device. The wireless interface device includes a wireless interface unit, a processing unit, an input/output unit, and a power management unit. The wireless interface unit wirelessly interfaces with the wirelessly enabled host using a communication interface protocol. The power management unit operably couples to the wireless interface unit, the processing unit, and the input/output unit. The wireless interface unit supports paging operations in which the wireless interface device is able to receive a page during a wirelessly enabled host in a page scanning period that corresponds to a duration of the page hopping sequence of the host.

EP0910006A2 discloses a power supply control apparatus. The control apparatus includes a power supply unit and a control unit. When the operator discontinues moving of a mouse, an X-encoder and a Y-encoder attached to the mouse stop outputting of pulse signals. The control unit allows a timer to start according to stopping of the pulse signals from the X-encoder and the Y-encoder. When a predetermined period of time elapses after the start of the timer, the timer outputs a timing signal to the control unit. According to the timing signal, the control unit controls the power supply unit so as to lower the power supplied from a battery in the power supply from normal level to a predetermined lower level or zero level.

### SUMMARY OF THE INVENTION

In order to solve the above problems, the present invention provides a power-saving wireless mouse, which has advantages of a significant power-saving effect, reduced cost, and convenience in usage.

Accordingly, the present invention provides a triggering power circuit for a power-saving wireless mouse as claimed in independent claims 1 and 2.

The present invention further includes a triggering power circuit, and when the input module sends out an instruction, the triggering power module charges inside and triggers a power circuit of the CPU, the transmission module, and the transmission antenna in a turn-on state through the output end thereof, and the mouse works normally. When the input module dose not send out an instruction, the triggering power module discharges inside, and maintains the power circuit in a turn-on state, so as to keep a high sensitivity of the mouse. When the triggering power module finishes discharging inside, the power circuit turns off, and at this time, no energy is consumed by the mouse. Therefore, the consumed power energy is greatly reduced, the life of the battery is prolonged, the user does not need to replace the battery frequently, and the cost thereof is significantly reduced.

The triggering power circuit of the present invention includes a charge-discharge circuit and a switch circuit. When a button of the input module is clicked, the power supply is turned on, and meanwhile, the charge-discharge circuit is charged. When the button is not clicked, the charge-discharge circuit is discharged, such that the gate terminal of the switch circuit maintains a certain voltage, the switch circuit is still in a turn-on state, and the CPU, the transmission module, and the transmission antenna still work normally. If there is still no click motion after a certain time period, when the discharging motion is substantially finished, the switch circuit turns off, and the CPU, the transmission module, and the transmission antenna are turned off automatically. In this way, the high response sensitivity of the mouse is maintained during a certain time period that the mouse is idle, and when the mouse is idle for a relatively long time period, the relevant circuits are automatically turned off, and thus realizing the purpose of saving power, saving the energy consumed by the mouse, prolonging the life of the battery, and thus, the user does not need to replace the battery frequently, and the cost is significantly reduced. For example, it takes 100 ms to click the mouse once, and the discharging process costs 1 s, if the user clicks the mouse once per 10 s, two ordinary batteries that merely can be used for 5 days originally can be used for 50 days after adopting the solution of the present invention. If the user clicks the mouse once per 30 s, two ordinary batteries that merely can be used for 5 days originally can be used for 150 days after adopting the solution of the present invention, and the life thereof is prolonged for almost 30 times.

Therefore, the technical solution of the present invention has advantages of a simple circuit structure, a low cost, and easily realized.

The balance between achieving the power-saving effect and maintaining a high sensitivity of the mouse can be conveniently achieved through changing nominal values of the first capacitor and/or the first resistor of the charge-discharge circuit and controlling the charge level and discharging time.

### BRIEF DESCRIPTION OF THE DRAWINGS

The present invention will become more fully understood from the detailed description given herein below for illustration only, and thus is not limitative of the present invention, and wherein:
FIG 1 is a circuit block diagram of a wireless mouse transmitter in the prior art.
FIG 2 is a circuit block diagram of a wireless mouse receiver in the prior art.
FIG 3 is a circuit block diagram of a wireless mouse transmitter according to the present invention.
FIG 4 is a circuit principle diagram of a wireless mouse transmitter according to a first embodiment of the present invention.
FIG 5 is a circuit principle diagram of a wireless mouse transmitter according to a second embodiment of the present invention.
FIG 6 is a circuit principle diagram of a wireless mouse transmitter according to a third embodiment of the present invention.

### DETAILED DESCRIPTION OF THE INVENTION

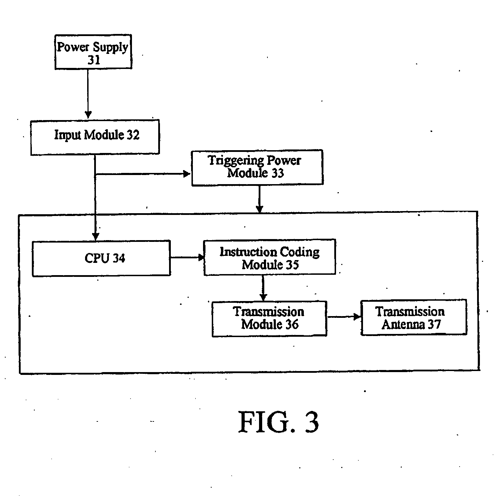

As shown in FIG 3, based upon the mouse in the prior art, the present invention is further added with a triggering power module 33, which is connected to the input module 32, the CPU 34, the transmission module 36, and the transmission antenna 37. When the input module 32 sends out an instruction, the power supply 31 is turned on, the triggering power module 33 triggers the CPU 34, the transmission module 36, and the transmission antenna 37 into a turn-on state to work normally. When the input module 32 does not send out an instruction, the triggering power module 33 is cut off from the power supply 31 and discharges inside, but still maintains a normal working state. If there is still no click motion after a certain time period, when the circuit finishes discharging process, the whole circuit is turned off automatically.

### First Embodiment

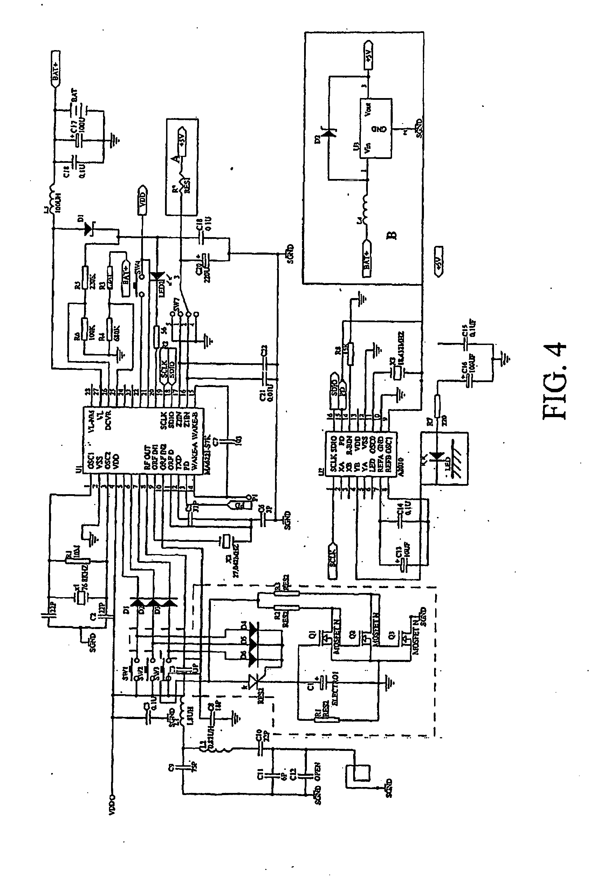

FIG 4 is a circuit principle diagram of a wireless mouse transmitter according to an embodiment of the present invention. The triggering power module 33 includes a switch circuit and a charge-discharge circuit. The switch circuit includes a fourth diode D4, a fifth diode D5, a sixth diode D6, a silicon controlled rectifier K, a second resistor R2, a third resistor R3, a first field-effect transistor Q1, a second field-effect transistor Q2, and a third field-effect transistor Q3. The charge-discharge circuit includes a first capacitor C1 and a first resistor R1. Anode terminals of the fourth diode D4, the fifth diode D5, and the sixth diode D6 are respectively connected to three buttons of the input module. Cathode terminals of the fourth diode D4, the fifth diode D5, and the sixth diode D6 are all connected to a gate terminal of the silicon controlled rectifier K in parallel. An anode terminal of the silicon controlled rectifier K is connected to a positive terminal of a power supply, and a cathode terminal of the silicon controlled rectifier K is connected to an anode terminal of the first capacitor. A gate terminal of the second field-effect transistor Q2 is connected to a drain of the first field-effect transistor Q1. A drain of the second field-effect transistor Q2 is connected to a gate terminal of the third field-effect transistor Q3. The first capacitor C1 and the first resistor R1 are both connected between the gate and the source of the first field-effect transistor Q1 in parallel, and both of them are grounded (i.e., the negative terminal of the power supply). A drain of the third field-effect transistor Q3 is connected to a low potential of the CPU, the transmission module, and the transmission antenna. Additionally, a first diode D1, a second diode D2, and a third diode D3 are disposed between the output end of the output module and the input end of the CPU to prevent the current from flowing from the CPU towards the triggering power circuit. When the button of the input module is clicked, the power supply is turned on, the circuit works, and charges the first capacitor C1. When the button is not clicked, the current does not flow from the CPU towards the triggering power module 33, due to the unidirectional conduction feature of the first diode D1, the second diode D2, and the third diode D3. Once the user clicks a button, the current flows towards the gate terminal of the silicon controlled rectifier K via a corresponding diode (D4, D5, or D6), and the silicon controlled rectifier K is conducted. As the anode terminal of the silicon controlled rectifier K is connected to the positive terminal of the power supply, and the cathode terminal is connected to the charging circuit, the silicon controlled rectifier K charges the first capacitor C1, such that the gate of the first field-effect, transistor Q1 maintains a certain voltage, and the first field-effect transistor Q1 is turned on. At this time, the drain of the first field-effect transistor Q1 is at a low potential, the second field-effect transistor Q2 cuts off, the gate of the third field-effect transistor Q3 is at a high level, and the third field-effect transistor Q3 is turned on. If there is still no click motion after a certain time period, when the capacitor substantially finishes the discharging process, the voltage at the gate of the first field-effect transistor is too low, the first field-effect transistor Q1 cuts off, the second field-effect transistor Q2 is turned on, and the third field-effect transistor Q3 cuts off. The whole circuit is turned off automatically, and at this time, the mouse does not consume any energy. When the user clicks the button again, the circuit is automatically turned on, which does not influence the usage at all.

By reducing the capacity of the first capacitor C1, less electricity is charged when the button is clicked, and thus saving move power.

By increasing the capacity of the first capacitor C1, the discharging time thereof can be prolonged. Furthermore, by increasing the resistance of the first resistor R1, the discharging time of the first capacitor C1 can be prolonged as well. Accordingly, even if the user does not click the button for a long time, the mouse still maintains high response sensitivity.

The implementation of the switch circuit is not limited to this embodiment, and the first field-effect transistor Q1, the second field-effect transistor Q2, the third field-effect transistor Q3 may also be a junction field-effect transistor, an insulated gate field-effect transistor, or other field-effect transistors being controlled by a certain voltage, such as 3018.

The input module 32 may have two, three, or more buttons. If the number of buttons is increased, the number of diodes in the switch circuit should be increased correspondingly, so as to realize the same function.

### Second Embodiment

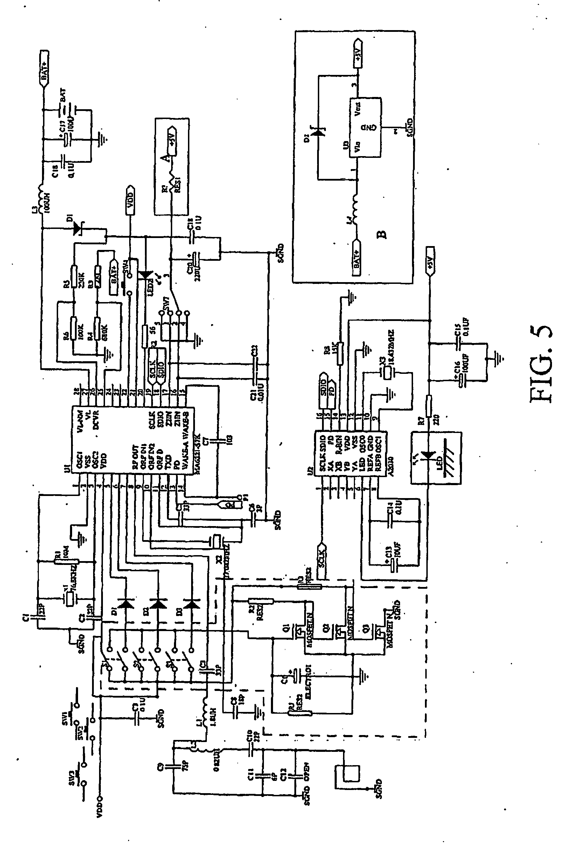

FIG 5 shows another embodiment of the present invention, and the difference between the second embodiment and the first embodiment lies in that, the second embodiment does not use the fourth diode D4, the fifth diode D5, and the sixth diode D6 to prevent the first capacitor C1 from discharging the CPU 34, but adopts a gang double-pole switch on the input module 32 (mouse buttons). When the user does not click the button, the first capacitor C1 and the CPU 34 are disconnected to prevent the first capacitor C1 from discharging the CPU 34, and thus realizing the same effect, and meanwhile reducing the implementation cost of the present invention.

According to this embodiment, by reducing the capacity of the first capacitor C1, less electricity is charged when the button of the mouse is clicked, and thus saving more power.

According to this embodiment, by increasing the capacity of the first capacitor C1, the discharging time can be prolonged. By increasing the resistance of the first resistor R1, the discharging time of the first capacitor C1 can be prolonged as well. Accordingly, even if the user does not click the button for a long time, the mouse still maintains high response sensitivity.

### Third example

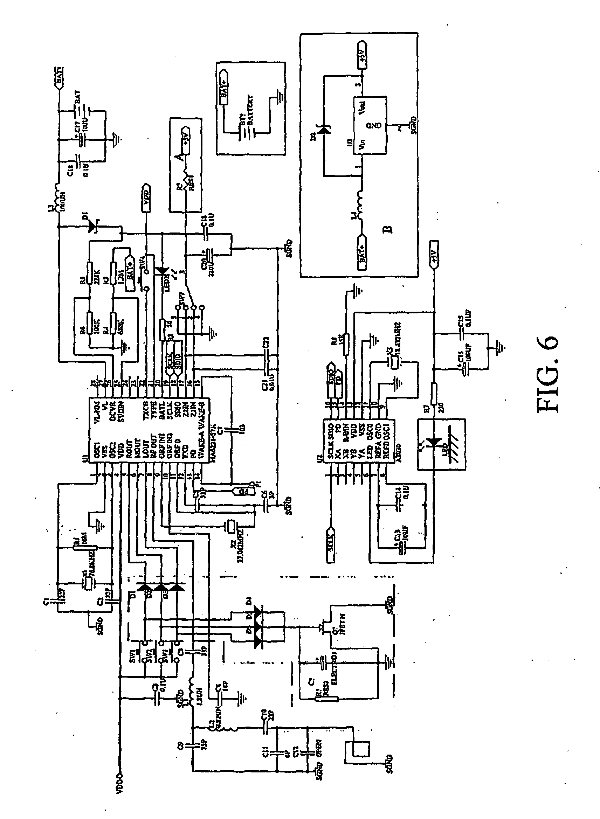

FIG. 6 is a circuit principle diagram of a wireless mouse transmitter according to an example of the present invention. The triggering power module 33 includes a switch circuit and a charge-discharge circuit. The switch circuit includes a fourth diode D4, a fifth diode D5, a sixth diode D6, and a first field-effect transistor Q1. The charge-discharge circuit includes a first capacitor C1 and a first resistor R1. Anode terminals of the fourth diode D4, the fifth diode D5, and the sixth diode D6 are respectively connected to three buttons of the input module. Cathode terminals of the fourth diode D4, the fifth diode D5, and the sixth diode D6 are all connected to a gate ofthe first field-effect transistor Q1 in parallel. The first capacitor C1 and the first resistor R1 are connected between the gate and source of the first field-effect transistor Q1 in parallel and both of them are grounded (i.e., the negative terminal of the power supply). A drain of the first field-effect transistor Q1 is connected to the low potential of the CPU, the transmission module, and the transmission antenna. Additionally, a first diode D1, a second diode D2, and a third diode D3 are disposed between the output end of the output module and the input end of the CPU, so as to prevent the current from flowing from the CPU towards the triggering power circuit. When the button of the input module is actuated, the power supply is turned on, the circuit works, and charges the first capacitor C1. When the button is not clicked, the current does not flow from the CPU towards the triggering power module 33, due to the unidirectional conduction feature of the first diode D1, the second diode D2, and the third diode D3. Furthermore, due to the unidirectional conduction feature of the third diode D3 and the fourth diode D4, the first capacitor C1 does not discharge the CPU 34, but merely discharges the first resistor R1, such that the gate of the first field-effect transistor Q1 maintains a certain voltage, and the first field-effect transistor Q1 still maintains being turned on. If there is still no click motion for a certain time period, when the capacitor substantially finishes the discharging process, the voltage at the gate of the first field-effect transistor is too low, the first field-effect transistor Q1 cuts off, the whole circuit is turned off automatically, and at this time, the mouse does not consume any energy. When the user clicks the button again, the circuit is automatically turned on in real time, which does not influence the usage at all.

According to this example, the first field-effect transistor Q1, the second field-effect transistor Q2, the third field-effect transistor Q3 may also be a junction field-effect transistor, an insulated gate field-effect transistor, or other field-effect transistors being controlled by a certain voltage, such as 3018.

## Claims

1. A triggering power circuit (33) for a power-saving wireless mouse, the mouse, comprising a transmitter and a receiver in a wireless connection, wherein the transmitter comprises an input module (32), a central processing unit (CPU) (34), an instruction coding module (35), a transmission module (36), and a transmission antenna (37), after receiving an instruction from the input module (32), the CPU (34) outputs the instruction to the instruction coding module (35), the instruction coding module (35) encodes and then outputs the instruction to the transmission module (36), the transmission module (36) receives and then transmits the encoded instruction via the transmission antenna (37); **characterized in that**
the triggering power circuit (33) comprises a switch circuit and a charge-discharge circuit; a control signal input end of the switch circuit is connected to the output end of the input module (32), a switching transistor (Q3) in the switch circuit controls an ON/OFF state between an output end (SGND) of the switch circuit and the ground
wherein the charge-discharge circuit comprises: a first capacitor (C1), and a first resistor (R1), connected in parallel to the first capacitor (C1),
wherein the switch circuit comprises a silicon controlled rectifier (K) and a first switching transistor (Q1), a second switching transistor (Q2), the third switching transistor (Q3), a fourth diode (D4), a fifth diode (D5), and a sixth diode (D6), wherein an anode terminal of the fourth diode (D4), an anode terminal of the fifth diode (D5), and an anode terminal of the sixth diode (D6) are taken as the control signal input end of the switch circuit for being respectively connected to a first button, a second button and a third button of the input module; and a cathode terminal of the fourth diode (D4), a cathode terminal of the fifth diode (D5), and a cathode terminal of the sixth diode (D6) are all connected to the gate terminal of the silicon controlled rectifier (K), an anode terminal of the silicon controlled rectifier (K) is connected to the positive terminal of the power supply (VDD), and a cathode terminal of the silicon controlled rectifier (K) is connected to a gate terminal of the first switching transistor (Q1); the first capacitor (C1) and the first resistor (R1) of the charge-discharge circuit are connected in parallel to the gate terminal of the first switching transistor (Q1) and the ground;
wherein the first switching transistor (Q1), the second switching transistor (Q2), and the third switching transistor (Q3) are all field-effect transistors; sources of the first, second, and third switching transistors are taken as the second end of the switch circuit and all connected to the ground; a drain of the first switching transistor is connected to a gate of the second switching transistor, a drain of the second switching transistor is connected to a gate of the third switching transistor, a drain of the third switching transistor is taken as the output-end of the switch circuit and the drain of the first switching transistor (Q1) is coupled to the anode terminal of the silicon controlled rectifier (K) via a second resistor (R2), and the drain of the second switching transistor (Q2) is coupled to the anode terminal of the silicon controlled rectifier (K) via a third resistor (R3).

2. A triggering circuit (33) for a power-saving wireless mouse, the mouse comprising a transmitter and a receiver in a wireless connection, wherein the transmitter comprises an input module (32), a central processing unit (CPU) (34), an instruction coding module (35), a transmission module (36), and a transmission antenna (37), after receiving an instruction from the input module (32), the CPU (34) outputs the instruction to the instruction coding module (35), the instruction coding module (35) encodes and then outputs the instruction to the transmission module (36), the transmission module (36) receives and then transmits the encoded instruction via the transmission antenna (37) **characterized in that**
the triggering power circuit (33) comprises a switch circuit and a charge-discharge circuit; a control signal input end of the switch circuit is connected to the output end of the input module (32), a switching transistor (Q3) in the switch circuit controls an ON/OFF state between an output end (SGND) of the switch circuit and the ground
wherein the charge-discharge circuit comprises: a first capacitor (C1), and a first resistor (R1), connected in parallel to the first capacitor (C1),
wherein the switch circuit comprises a first gang double-pole switch (S1) connected to a first button of the input module, a second gang double-pole switch (S2) connected to a second button of the input module, a third gang double-pole switch (S3) connected to a third button of the input module, a first switching transistor (Q1), a second switching transistor (Q2), and the third switching transistor (Q3); when the first gang double-pole switch, the second gang double-pole switch, and the third gang double-pole switch are connected in parallel, one end thereof is connected to the positive terminal of the power supply (VDD), and the other end thereof is coupled to a gate terminal of the first switching transistor (Q1); the first capacitor (C1) and the first resistor (R1) of the charge-discharge circuit is connected between the gate terminal of the first switching transistor (Q1) and the ground in parallel;
wherein the first switching transistor (Q1), the second switching transistor (Q2),and the third switching transistor (Q3) are all field-effect transistors; sources of the first, second, and third switching transistors are taken as the second end of the switch circuit and all connected to the ground; a drain of the first switching transistor is connected to a gate of the second switching transistor, a drain of the second switching transistor is connected to a gate of the third switching transistor, a drain of the third switching transistor is taken as an
output end of the switch circuit and the drain of the first switching transistor (Q1) is coupled to the positive terminal of the power supply (VDD) via a second resistor (R2), and the drain of the second switching transistor (Q2) is coupled to the positive terminal of the power supply (VDD) via a third resistor (R3).

3. The triggering power circuit (33) according to claim 1 or 2, further comprising: a first diode (D1), a second diode (D2), and a third diode (D3), wherein an anode terminal of the first diode (D1), an anode terminal of the second diode (D2), and an anode terminal of the third diode (D3) are respectively connected to the first, second, and third output ends of the input module; cathode terminals thereof are respectively connected to button signal input ends of the CPU.

## Patentansprüche

1. Auslöse- und Stromversorgungsschaltung (33) für eine energiesparende Funkmaus, bei der die Maus eine Sendevorrichtung mit einem Eingabemodul (32), einer Zentraleinheit (34), einem Befehlscodiermodul (35), einem Sendemodul (36) und einer Sendeantenne (37) und eine mit der Sendevorrichtung in Funkverbindung stehende Empfangsvorrichtung umfasst, wobei die Zentraleinheit (34) einen vom Eingabemodul (32) empfangenen Befehl an das Befehlscodiermodul (35) ausgibt, das Befehlscodiermodul (35) den Eingangsbefehl codiert und an das Sendemodul (36) ausgibt und das Sendemodul (36) den codierten Befehl empfängt und über die Sendeantenne (37) aussendet, **dadurch gekennzeichnet, dass**
- die Auslöse- und Stromversorgungsschaltung (33) einen Schaltkreis, dessen Steuersignaleingang mit dem Ausgang des Eingabemoduls (32) verbunden ist, und einen Lade- und Entladekreis umfasst, wobei die Verbindung zwischen Ausgang (SGND) des Schaltkreises und Masse durch einen dritten Schalttransistor (Q3) im Schaltkreis ein- bzw. ausschaltbar ist;
- der Lade- und Entladekreis eine erste Kapazität (C1) und einen ersten Widerstand (R1) umfasst, welche parallel zueinander geschaltet sind;
- der Schaltkreis einen steuerbaren Siliziumgleichrichter (K), einen ersten Schalttransistor (Q1), einen zweiten Schalttransistor (Q2), einen dritten Schalttransistor (Q3), eine vierte Diode (D4), eine fünfte Diode (D5) und eine sechste Diode (D6) umfasst, wobei die vierte Diode (D4), die fünfte Diode (D5) und die sechste Diode (D6) jeweils über ihren Pluspol als Steuersignaleingang des Schaltkreises jeweils mit der ersten, zweiten bzw. dritten Taste des Eingabemoduls und jeweils über ihren Minuspol mit dem Gate des steuerbaren Siliziumgleichrichters (K) verbunden sind, während der steuerbare Siliziumgleichrichter (K) über seine Anode mit dem Pluspol einer Stromquelle (VDD) und über seine Kathode mit dem Gate des ersten Schalttransistors (Q1) verbunden ist, und wobei die erste Kapazität (C1) und der erste Widerstand (R1) des Lade- und Entladekreises in paralleler Schaltung an das Gate des ersten Schalttransistors (Q1) und an Masse angeschlossen sind;
- der erste Schalttransistor (Q1), der zweite Schalttransistor (Q2) und der dritte Schalttransistor (Q3) jeweils als Feldeffekttransistor ausgeführt und jeweils über ihre Source als zweiter Anschluss des Schaltkreises an Masse angeschlossen sind, während der erste Schalttransistor über seinen Drain mit dem Gate des zweiten Schalttransistors und der zweite Schalttransistor über seinen Drain mit dem Gate des dritten Schalttransistors verbunden ist und der Drain des dritten Schalttransistors als Ausgang des Schaltkreises fungiert, wobei der Drain des ersten Schalttransistors (Q1) über einen zweiten Widerstand (R2) mit der Anode des steuerbaren Siliziumgleichrichters (K) und der Drain des zweiten Schalttransistors (Q2) über einen dritten Widerstand (R3) mit der Anode des steuerbaren Siliziumgleichrichters (K) gekoppelt ist.

2. Auslöse- und Stromversorgungsschaltung (33) für eine energiesparende Funkmaus, bei der die Maus eine Sendevorrichtung mit einem Eingabemodul (32), einer Zentraleinheit (34), einem Befehlscodiermodul (35), einem Sendemodul (36) und einer Sendeantenne (37) und eine mit der Sendevorrichtung in Funkverbindung stehende Empfangsvorrichtung umfasst, wobei die Zentraleinheit (34) einen vom Eingabemodul (32) empfangenen Befehl an das Befehlscodiermodul (35) ausgibt, das Befehlscodiermodul (35) den Eingangsbefehl codiert und an das Sendemodul (36) ausgibt und das Sendemodul (36) den codierten Befehl empfängt und über die Sendeantenne (37) aussendet, **dadurch gekennzeichnet, dass**
- die Auslöse- und Stromversorgungsschaltung (33) einen Schaltkreis, dessen Steuersignaleingang mit dem Ausgang des Eingabemoduls (32) verbunden ist, und einen Lade- und Entladekreis umfasst, wobei die Verbindung zwischen Ausgang (SGND) des Schaltkreises und Masse durch einen dritten Schalttransistor (Q3) im Schaltkreis ein- bzw. ausschaltbar ist;
- der Lade- und Entladekreis eine erste Kapazität (C1) und einen ersten Widerstand (R1) umfasst, welche parallel zueinander geschaltet sind;
- der Schaltkreis einen ersten, mit einer ersten Taste des Eingabemoduls verbundenen, gekoppelten zweipoligen Schalter (S1), einen zweiten, mit einer zweiten Taste des Eingabemoduls verbundenen, gekoppelten zweipoligen Schalter (S2), einen dritten, mit einer dritten Taste des Eingabemoduls verbundenen, gekoppelten zweipoligen Schalter (S3), einen ersten Schalttransistor (Q1), einen zweiten Schalttransistor (Q2) und einen dritten Schalttransistor (Q3) umfasst, wobei die Parallelschaltung aus erstem, zweitem und drittem gekoppeltem zweipoligem Schalter an einem Ende mit dem Pluspol einer Stromquelle (VDD) verbunden und am anderen Ende mit dem Gate des ersten Schalttransistors (Q1) gekoppelt ist, und wobei die erste Kapazität (C1) und der erste Widerstand (R1) des Lade- und Entladekreises zwischen Gate des ersten Schalttransistors (Q1) und Masse parallel zueinander geschaltet sind;
- der erste Schalttransistor (Q1), der zweite Schalttransistor (Q2) und der dritte Schalttransistor (Q3) jeweils als Feldeffekttransistor ausgeführt und jeweils über ihre Source als zweiter Anschluss des Schaltkreises an Masse angeschlossen sind, während der erste Schalttransistor über seinen Drain mit dem Gate des zweiten Schalttransistors und der zweite Schalttransistor über seinen Drain mit dem Gate des dritten Schalttransistors verbunden ist und der Drain des dritten Schalttransistors als Ausgang des Schaltkreises fungiert, wobei der Drain des ersten Schalttransistors (Q1) über einen zweiten Widerstand (R2) mit dem Pluspol der Stromquelle und der Drain des zweiten Schalttransistors (Q2) über einen dritten Widerstand (R3) mit dem Pluspol der Stromquelle (VDD) gekoppelt ist.

3. Auslöse- und Stromversorgungsschaltung (33) gemäß Anspruch 1 oder 2, **dadurch gekennzeichnet, dass** sie ferner eine erste Diode (D1), eine zweite Diode (D2) und eine dritte Diode (D3) umfasst, wobei die erste Diode (D1), die zweite Diode (D2) und die dritte Diode (D3) jeweils über ihren Pluspol jeweils mit dem ersten, zweiten bzw. dritten Ausgang des Eingabemoduls und jeweils über ihren Minuspol mit einem Tastsignaleingang der Zentraleinheit verbunden sind.

## Revendications

1. Un circuit d'alimentation électrique à déclenchement (33) utilisé sur souris économique sans fil, ladite souris comprenant un dispositif émetteur et un dispositif récepteur, ledit dispositif émetteur et ledit dispositif récepteur étant reliés sans fil ; ledit dispositif émetteur comprenant un module d'entrée (32), une unité centrale de traitement (34), un module d'encodage d'instructions (35), un module émetteur (36) et un antenne émettrice (37), ladite unité centrale de traitement (34) ayant reçu les instructions du module d'entrée (32), elle l'envoie au module d'encodage d'instructions (35) et une fois que le module d'encodage d'instructions (35) a encodé les instructions entrantes il les envoie au module émetteur (36), après avoir reçu les instructions encodées, le module émetteur (36) émettant via l'antenne émettrice (37) ; **caractérisé en ce que** :
Ledit circuit d'alimentation électrique à déclenchement (33) comprend un circuit de commutation et un circuit de charge/décharge, l'extrémité d'entrée de signal de commande dudit circuit de commutation est connectée à l'extrémité de sortie dudit module d'entrée (32), le troisième transistor de commutation (Q3) dudit circuit de commutation commande la connexion entre l'extrémité de sortie (SGND) du circuit de commutation et la terre ;
Ledit circuit de charge/décharge comprend un premier condensateur (C1) et une première résistance (R1) en parallèle ;
Ledit circuit de commutation comprend un redresseur au silicium commandé (K), un premier transistor de commutation (Q1), un deuxième transistor de commutation (Q2), un troisième transistor de commutation (Q3), un quatrième transistor de commutation (Q4), une quatrième diode (D4), une cinquième diode (D5) et une sixième diode (D6), le pôle positif de ladite quatrième diode (D4), le pôle positif de ladite cinquième diode (D4) et le pôle positif de ladite sixième diode (D6) étant respectivement connectés en tant qu'extrémité d'entrée de signal de commande dudit circuit de commutation à la première touche, la deuxième touche et la troisième touche dudit module d'entrée, le pôle négatif de ladite quatrième diode (D4), le pôle négatif de ladite cinquième diode (D5) et le pôle négatif de ladite sixième diode (D6) étant connectés en série à l'électrode de commande du redresseur au silicium commandé (K), le pôle positif dudit redresseur au silicium commandé (K) étant connecté au pôle positif de l'alimentation (VDD), le pôle négatif étant connecté à l'électrode de commande dudit premier transistor de commutation (Q1), le premier condensateur (C1) et la première résistance (R1) dudit circuit de charge/décharge étant connectés en parallèle à l'électrode de commande dudit premier transistor de commutation (Q1) ;
Ledit premier transistor de commutation (Q1), ledit deuxième transistor de commutation (Q2) et ledit troisième transistor de commutation (Q3) sont tous des transistors à effet de champ ; la source du premier, du deuxième et du troisième transistor de commutation constitue la deuxième extrémité dudit circuit de commutation et lesdits premier, deuxième et troisième transistors de commutation sont connectés en série à la terre, le drain dudit premier transistor de commutation est connecté à la grille dudit deuxième transistor de commutation, le drain dudit deuxième transistor de commutation est connecté à la grille dudit troisième transistor de commutation, la grille dudit troisième transistor de commutation constitue ladite extrémité de sortie dudit circuit de commutation, la grille dudit premier transistor de commutation (Q1) est couplée au pôle positif dudit redresseur au silicium commandé (K) via une deuxième résistance (R2), le drain dudit deuxième transistor de commutation (Q2) est couplé au pôle positif dudit redresseur au silicium commandé (K) via une troisième résistance (R3).

2. Un circuit d'alimentation électrique à déclenchement (33) utilisé sur souris économique sans fil, ladite souris comprenant un dispositif émetteur et un dispositif récepteur, ledit dispositif émetteur et ledit dispositif récepteur étant reliés sans fil ; ledit dispositif émetteur comprenant un module d'entrée (32), une unité centrale de traitement (34), un module d'encodage d'instructions (35), un module émetteur (36) et un antenne émettrice (37), ladite unité centrale de traitement (34) ayant reçu les instructions du module d'entrée (32), elle l'envoie au module d'encodage d'instructions (35), une fois que le module d'encodage d'instructions (35) a encodé les instructions entrantes il les envoie au module émetteur (36), après avoir reçu les instructions encodées, le module émetteur (36) émettant via l'antenne émettrice (37) ; **caractérisé en ce que** :
Ledit circuit d'alimentation électrique à déclenchement (33) comprend un circuit de commutation et un circuit de charge/décharge, l'extrémité d'entrée de signal de commande dudit circuit de commutation est connecté à l'extrémité de sortie dudit module d'entrée (32), le troisième transistor de commutation (Q3) dudit circuit de commutation commande la connexion entre l'extrémité de sortie (SGND) du circuit de commutation et la terre ;
Ledit circuit de commutation et un circuit de charge/décharge comprend un premier condensateur (C1) et une première résistance (R1) en parallèle ;
Ledit circuit de commutation comprend un premier commutateur bipolaire couplé (S1) connecté à la première touche dudit module d'entrée, un deuxième commutateur bipolaire couplé (S2) connecté à la deuxième touche dudit module d'entrée, un troisième commutateur bipolaire couplé (S3) connecté à la troisième touche dudit module d'entrée, un premier transistor de commutation (Q1), un deuxième transistor de commutation (Q2) et un troisième transistor de commutation (Q3), après mise en parallèle dudit premier commutateur bipolaire couplé, du deuxième commutateur bipolaire couplé et du troisième commutateur bipolaire couplé, une extrémité est connectée au pôle positif de l'alimentation (VDD), l'autre extrémité est couplée à l'électrode de commande dudit premier transistor de commutation (Q1), le premier condensateur (C1) et la première résistance (R1) dudit circuit de charge/décharge sont connectés en parallèle entre le premier transistor de commutation (Q1) et la terre ;
Ledit premier transistor de commutation (Q1), ledit deuxième transistor de commutation (Q2) et ledit troisième transistor de commutation (Q3) sont tous des transistors à effet de champ ; la source du premier, du deuxième et du troisième transistor de commutation constitue la deuxième extrémité dudit circuit de commutation et lesdits premier, deuxième et troisième transistors de commutation sont connectés en série à la terre, le drain dudit premier transistor de commutation est connecté à la grille dudit deuxième transistor de commutation, le drain dudit deuxième transistor de commutation est connecté à la grille dudit troisième transistor de commutation, la grille dudit troisième transistor de commutation constitue ladite extrémité de sortie dudit circuit de commutation, la grille dudit premier transistor de commutation (Q1) est couplée au pôle positif de ladite source via la deuxième résistance (R2), le drain dudit deuxième transistor de commutation (Q2) est couplé au pôle positif de ladite source (VDD) via la troisième résistance (R3).

3. Circuit d'alimentation électrique à déclenchement (33) selon l'une quelconque des revendications 1 ou 2, **caractérisé en ce que** : il comprend une première diode (D1), une deuxième diode (D2), une troisième diode (D3), les pôles positifs desdites première diode (D1), deuxième diode (D2) et troisième diode (D3) étant respectivement connectés à la première, la deuxième et la troisième extrémité de sortie dudit module d'entrée, les pôles négatifs étant respectivement connectés à l'extrémité d'entrée de signal de touche de l'unité centrale de traitement.
